# EUROPÄISCHE PATENTSCHRIFT

(11) **EP 4 390 109 B1**
(45) Veröffentlichungstag und Bekanntmachung des Hinweises auf die Patenterteilung: **15.04.2026**
(21) Anmeldenummer: 23216139.8
(22) Anmeldetag: 13.12.2023
(51) Int. Cl.: F02M 61/14, F02M 21/02, F02M 69/04, F02M 35/10

(54) **ZYLINDERKOPF FÜR EINE BRENNKRAFTMASCHINE UND EINE BRENNKRAFTMASCHINE MIT EINEM SOLCHEN ZYLINDERKOPF**
CYLINDER HEAD FOR AN INTERNAL COMBUSTION ENGINE AND AN INTERNAL COMBUSTION ENGINE COMPRISING SUCH A CYLINDER HEAD
CULASSE POUR UN MOTEUR À COMBUSTION INTERNE ET UN MOTEUR À COMBUSTION INTERNE AVEC UNE TELLE CULASSE

(30) Priorität: 23.12.2022 DE 102022004896
(43) Veröffentlichungstag der Anmeldung: 26.06.2024
(73) Patentinhaber: DEUTZ Aktiengesellschaft, 51149 Köln (DE)
(72) Erfinder: Roth, Thomas, Rösrath (DE)

(56) Entgegenhaltungen:
- WO-A1-2016/169712
- WO-A1-2017/089042
- US-A1- 2014 084 085

## Beschreibung

Die vorliegende Erfindung betrifft einen Zylinderkopf für eine Brennkraftmaschine mit den Merkmalen des Oberbegriffs des Anspruchs 1 und eine Brennkraftmaschine mit einem solchen Zylinderkopf.

Einen solchen Zylinderkopf zeigt WO 2016/169712 A1. Bei dem dort beschriebenen Aufsatzelement handelt es sich um einen Schalldämpfer zum Reduzieren von Körperschallemissionen während der Einblasung von Gas.

WO 2017/089042 A1 zeigt einen ähnlichen Zylinderkopf, wobei eine Gasleitung außen mit Leitschaufeln versehen ist, um der Brennluft und/oder dem Brenngas ein Drall aufzuerlegen.

Der Zylinderkopf von Brennkraftmaschinen schließt die Brennkammern auf der dem Kolben gegenüberliegenden Seite ab und umfasst regelmäßig die Ein- und Auslasskanäle sowie die Ventilsteuerung für die Gaswechselvorgänge in der Brennkraftmaschine. Bei Motoren mit Saugrohreinspritzung wird Kraftstoff in den Einlasskanal gespritzt, sodass es im Einlasskanal zur Gemischbildung von dem Kraftstoff mit der angesaugten Luft kommt.

Aus der EP 0 694 124 B1 ist eine Brennkraftmaschine mit Saugrohreinspritzung bekannt, bei der Kraftstoff über eine Röhrchen in den Einlasskanal eingespritzt wird.

An dem sich in den Einlasskanal öffnenden Ende umfasst das Röhrchen ein Zerstäubungssieb, das zu einer verbesserten Gemischbildung den aus dem Röhrchen ausströmenden Kraftstoff zerstäubt. Dies hat den Nachteil, dass sich das Zerstäubungssieb im dauerhaften Betrieb zusetzen kann und die Kraftstoffzufuhr verschlechtert wird. Zudem kann Kraftstoff durch das Zerstäubungssieb in dem Röhrchen zurückgehalten werden, sodass es insbesondere bei der Verwendung von Wasserstoff als Kraftstoff zu ungewollten Rückzündungen in das Röhrchen hineinkommen kann.

Aus der US 2014 /0 084 085 A1 ist eine Brennkraftmaschine mit einem Injektor bekannt, wobei der Injektor ein Düsenelement und einen Mischabschnitt umfasst.

Hiervon ausgehend liegt der vorliegenden Erfindung die Aufgabe zu Grunde, einen Zylinderkopf für eine Brennkraftmaschine sowie eine Brennkraftmaschine mit einem solchen Zylinderkopf bereitzustellen, die eine dauerhaft günstige Gemischbildung im Einlasskanal ermöglicht.

Zur Lösung der Aufgabe wird ein Zylinderkopf mit den Merkmalen des Anspruchs 1 vorgeschlagen.

Durch den nach radial außen stehenden Luftleitabschnitt wird stromabwärts von dem Luftleitabschnitt eine verstärkt turbulente Strömung in der angesaugten Luft erzeugt, die eine verbesserte Durchmischung der angesaugten Luft mit dem über das Einspritzröhrchen in den Einlasskanal eingespritzten Kraftstoff ermöglicht. Aufgrund der nach radial außen stehenden Anordnung des Luftleitabschnitts wird das Einspritzröhrchen durch den Luftleitabschnitt nicht blockiert, sodass das Einspritzröhrchen weder mit fortschreitendem Betrieb verstopft oder Kraftstoff von diesem in dem Einspritzröhrchen zurückgehalten wird.

Der Einlasskanal bildet den letzten Teil des Lufteinlasssystems des Motors. Der Einlasskanal verbindet den Ansaugkrümmer mit dem Brennraum und wird mit den Einlassventilen geöffnet und geschlossen.

Der Injektor ist grundsätzlich auch ohne das Einspritzrohr funktionsfähig. Das Einspritzrohr verlagert den Eintrittspunkt des Kraftstoffs in die Strömung des Einlasskanals von der Begrenzungswand des Einlasskanals zur Mitte des Einlasskanals. Das Einspritzrohr muss daher getrennt von den Komponenten des Injektors betrachtet werden, die für seine allgemeine Funktion notwendig sind.

In einer möglichen Ausführungsform kann eine radiale Erstreckung des Luftleitabschnitts bezüglich der Röhrenseele größer sein als eine axiale Erstreckung in Richtung der Röhrenseele.

Der Luftleitabschnitt respektive die Luftleitscheibe können insbesondere kreisringförmig ausgestaltet sein. Der Luftleitabschnitt respektive die Luftleitscheibe können einen Durchbruch aufweisen, dessen Längsachse koaxial zu der Röhrenseele angeordnet ist. Der Durchbruch der Luftleitscheibe kann einen Durchmesser aufweisen, der größer oder gleich einem Durchmesser der Einspritzöffnung ist.

In einer weiteren Ausführungsform kann das Aufsatzelement einen ersten Verbindungsabschnitt aufweisen, mit dem das Aufsatzelement auf dem Einspritzröhrchen angeordnet ist. Das Aufsatzelement kann ein Innengewinde aufweisen, das in ein Außengewinde des Einspritzröhrchens eingreift. Alternativ kann das Aufsatzelement auf das Einspritzröhrchen aufgepresst werden oder das Aufsatzelement und das Einspritzröhrchen können einteilig ausgeführt sein.

Der Luftleitabschnitt kann sich von dem ersten Verbindungsabschnitt bezüglich der Röhrenseele nach radial außen erstrecken. Alternativ kann sich der Luftleitabschnitt in axialer Richtung entlang der Röhrenseele an den Verbindungsabschnitt anschließen und sich bezüglich der Röhrenseele nach radial außen erstrecken.

Es ist eine Ausführungsform möglich, in der die kleinste zylinderförmige Einhüllende des ersten Verbindungsabschnitts, deren Zylinderachse koaxial zu der Röhrenseele angeordnet ist, einen kleineren Radius aufweist als der größte radiale Abstand des Luftleitabschnitts von der Röhrenseele.

In einer weiteren möglichen Ausführungsform kann das Einspritzröhrchen eine Einspritzöffnung aufweisen, die sich in den Einlasskanal öffnet.

Zur Lösung der Aufgabe wird ferner eine Brennkraftmaschine vorgeschlagen, die einen Zylinderkopf in einer zuvor beschriebenen Ausgestaltung umfasst.

Nachfolgende werden anhand der Figurenzeichnungen mögliche erfindungsgemäße Ausgestaltungen eines Zylinderkopfes respektive einer Brennkraftmaschine erläutert.

Hierin zeigt:
- Figur 1: eine schematische Darstellung einer Teilschnittansicht einer Brennkraftmaschine mit einem ersten erfindungsgemäßen Zylinderkopf;
- Figur 2: eine Seitenansicht des Aufsatzelements aus Figur 1;
- Figur 3: eine Ansicht des Aufsatzelements aus Figur 1 in Pfeilrichtung III in Figur 2; und
- Figur 4: eine Schnittansicht des Aufsatzelements entlang der Schnittlinie IV-IV aus Figur 3.

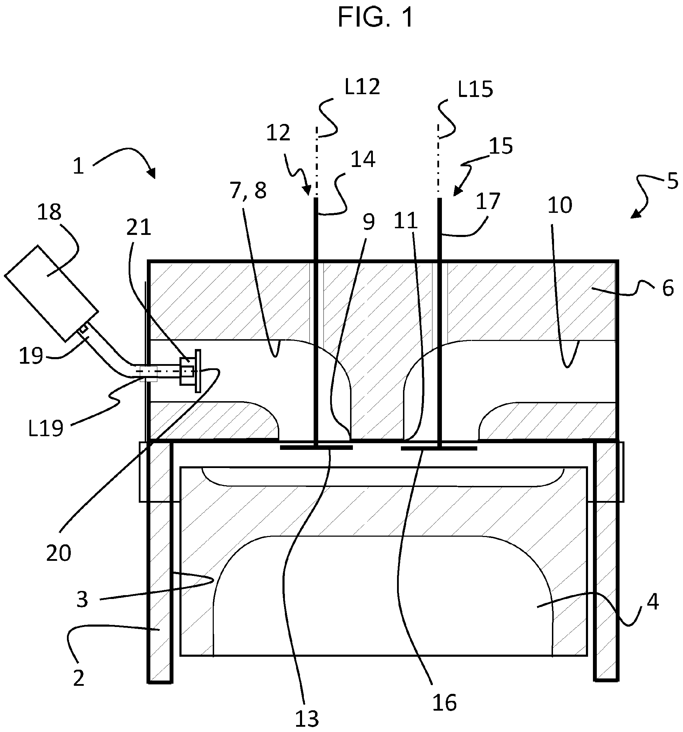

In den Figuren 1 bis 4, die nachfolgend gemeinsam beschrieben werden, wird eine Brennkraftmaschine 1 dargestellt. Die Brennkraftmaschine 1 wird insbesondere mit Wasserstoff als Kraftstoff betrieben. Die Brennkraftmaschine 1 umfasst ein Kurbelgehäuse 2, das mit einem erfindungsgemäßen Zylinderkopf 5 verbunden ist. Das Kurbelgehäuse 2 umfasst in bekannter Weise eine variable Brennkammer 3, die durch einen beweglichen Kolben 4 und den Zylinderkopf 5 begrenzt wird. Der Zylinderkopf 5 umfasst eine Zylinderkopfanordnung, die ein Zylinderkopfgrundelement 6 und einen nicht dargestellten Zylinderkopfdeckel aufweist, die miteinander verbunden sind.

In dem Zylinderkopfgrundelement 6 sind ein Einlasskanal 7 und ein Auslasskanal 10 eingegossen. Über den Einlasskanal 7 kann der Brennkammer 3 ein Luft-Kraftstoff-Gemisch zugeführt werden. Der Einlasskanal 7 wird durch eine Wand 8 begrenzt und umfasst eine Brennkammereinlassöffnung 9, die sich in Richtung der Brennkammer 3 öffnet. Die Brennkammereinlassöffnung 9 kann in bekannter Weise durch ein Einlassventil 12 wahlweise geöffnet oder verschlossen werden. Das Einlassventil 12 umfasst hierzu einen Einlassventilteller 13, der in einem Ventilsitz der Brennkammereinlassöffnung 9 angeordnet ist, wenn die Brennkammereinlassöffnung 9 verschlossen werden soll, und einen Einlassventilschaft 14, der sich im Wesentlichen zylindrisch entlang einer Ventilachse L12 erstreckt. Das Einlassventil 12 kann durch einen entsprechenden Ventiltrieb, der oberhalb des Zylinderkopfgrundelements 6 angeordnet ist, entlang der Ventilachse L12 bewegt werden.

Über den Auslasskanal 10 können die durch die Verbrennung des Luft-Kraftstoff-Gemischs in der Brennkammer 3 entstandenen Abgase aus der Brennkammer 3 ausströmen. Der Auslasskanal 10 wird durch eine Wand begrenzt und umfasst eine Brennkammerauslassöffnung 11, die sich in Richtung der Brennkammer 3 öffnet. Die Brennkammerauslassöffnung 11 kann in bekannter Weise durch ein Auslassventil 15 wahlweise geöffnet oder verschlossen werden. Das Auslassventil 15 umfasst hierzu einen Auslassventilteller 16, der in einem Ventilsitz der Brennkammerauslassöffnung 11 angeordnet ist, wenn die Brennkammerauslassöffnung 11 verschlossen werden soll, und einen Auslassventilschaft 17, der sich im Wesentlichen zylindrisch entlang einer Ventilachse L15 erstreckt. Das Auslassventil 15 kann durch den Ventiltrieb entlang der Ventilachse L15 bewegt werden.

Für die Gemischbildung des Luft-Kraftstoff-Gemisches wird über einen Injektor 18, der über nicht dargestellte Verbindungsmittel mit der Zylinderkopfanordnung, insbesondere mit dem Zylinderkopfgrundelement 6, verbunden ist, Kraftstoff in den Einlasskanal 7 eingespritzt. Hierzu ist ein Auslass des Injektors 18 fluidisch mit einem Einspritzröhrchen 19 verbunden, das sich entlang einer Röhrenseele L19 in den Einlasskanal 7 hinein erstreckt. Das Einspritzröhrchen 19 umfasst eine Einspritzöffnung 20, die sich in den Einlasskanal 7 öffnet. Das Einspritzröhrchen 19 ist im vorliegenden Fall abgewinkelt ausgeführt und umfasst auf Seite des Injektors 18 einen ersten geraden Endabschnitt und auf Seite der Einspritzöffnung 20 einen zweiten geraden Endabschnitt, die über ein Kurvenabschnitt miteinander verbunden sind. Die Röhrenseele L19 erstreckt sich vollständig von einem Ende des Einspritzröhrchens 19 bis hin zu dem gegenüberliegenden Ende, wobei die Röhrenseele L19 in Figur 1 der Übersichtlichkeit halber nur im Bereich des zweiten Endabschnitts dargestellt ist. Es ist ferner denkbar, dass die Röhrenseele jede andere Form annimmt, beispielsweise vollständig gerade oder S-förmig ist.

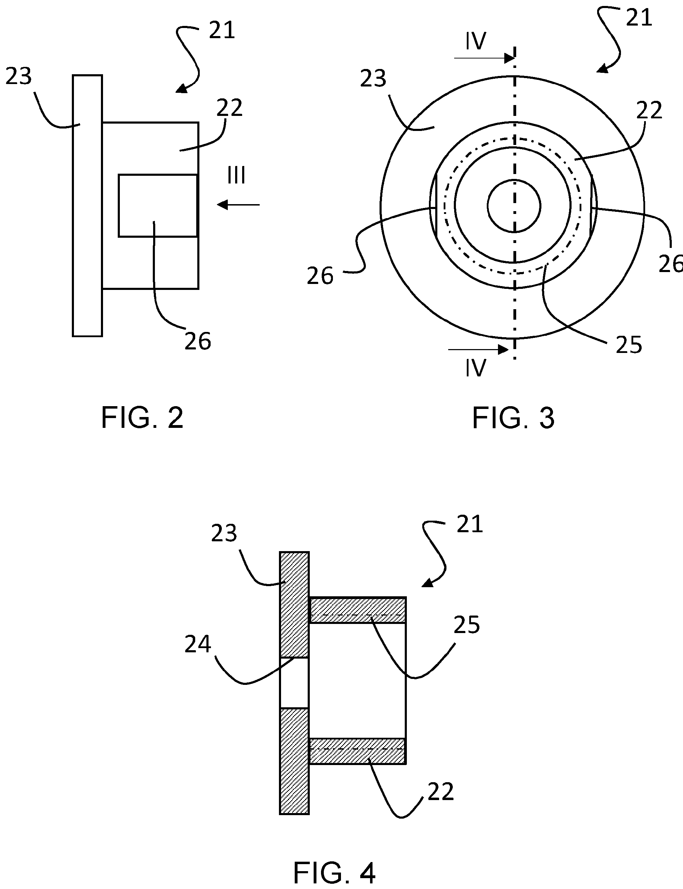

Auf dem Einspritzröhrchen sitzt im Bereich des zweiten Endabschnitts ein erstes Aufsatzelement 21, das in den Figuren 2 bis 4 detailliert dargestellt wird. Das erste Aufsatzelement 21 umfasst einen ringförmigen ersten Verbindungsabschnitt 22, dessen Innenkontur komplementär zu der Außenkontur das Einspritzröhrchens 19 ausgestaltet ist. Das erste Aufsatzelement 21 ist fest mit dem Einspritzröhrchen 19 verbunden. Im vorliegenden Fall ist das erste Aufsatzelement 21 auf das Einspritzröhrchen 19 aufgeschraubt. Das Aufsatzelement 21 umfasst hierzu einen zylindrischen Verbindungsabschnitt 22, in den ein Innengewinde 25 eingearbeitet ist. Das Aufsatzelement 21 sitzt mit dem Verbindungsabschnitt 22 auf dem zweiten Endabschnitt des Einspritzröhrchens 19 auf, wobei das Innengewinde 25 mit einem nicht dargestellten komplementären Außengewinde des Einspritzröhrchens 19 in Eingriff ist. Zum Aufschrauben des Aufsatzelements 21 auf das Verbindungsröhrchen 19 weist der Verbindungsabschnitt 22 Werkzeugangriffsflächen 26 auf, die komplementär zu einem Schraubwerkzeug ausgestaltet sind, beispielsweise einem Maulschlüssel oder Ähnlichem.

Es ist allerdings auch denkbar, dass die beiden Teile anderweitig gefügt, beispielsweise gelötet, verklebt oder verpresst sind. Grundsätzlich ist es auch denkbar, dass das Aufsatzelement 21 und das Einspritzröhrchen 19 einteilig ausgeführt sind.

Entlang der Röhrenseele L19 schließt an den Verbindungsabschnitt 22 ein Luftleitabschnitt 30 an. Im montierten Zustand des vierten Aufsatzelements 21 auf dem Einspritzröhrchen 19 kommt der Luftleitabschnitt 23 in axialer Richtung in Anlage mit dem Einspritzröhrchen 19.

Der Luftleitabschnitt 23 ist dabei als Luftleitscheibe ausgeführt, dessen Erstreckung in Richtung der Röhrenseele L19 kleiner ist als die radiale Erstreckung bezüglich der Röhrenseele L19. Der Luftleitabschnitt 23 ist im vorliegenden Fall außenzylindrisch ausgeführt, ohne darauf beschränkt zu sein, und weist einen größeren Außendurchmesser auf als der Verbindungsabschnitt 22. Mit anderen Worten steht der Luftleitabschnitt 23 in radialer Richtung bezüglich der Röhrenseele L19 über den Verbindungsabschnitt 22 hinaus.

Der Luftleitabschnitt 23 umfasst einen Durchbruch 24, der insbesondere zylindrisch ausgeführt ist und einen Durchbruchdurchmesser aufweist. Die Längsachse des Durchbruchs 24 ist koaxial zu der Röhrenseele L19 angeordnet. Der Durchbruchdurchmesser des Durchbruchs 24 ist größer oder gleich einem Durchmesser der Einspritzöffnung 20 ausgeführt, sodass Kraftstoff frei aus dem Einspritzröhrchen 19 ausströmen kann.

Der Luftleitabschnitt 23 verkleinert den wirksamen Querschnitt des Einlasskanals 7 lokal, sodass es in Strömungsrichtung der angesaugten Luft hinter dem Luftleitabschnitt 23 zu Verwirbelungen kommt, die eine Gemischbildung von angesaugter Luft und eingespritztem Kraftstoff begünstigen.

Das Aufsatzelement 21 ist im vorliegenden Fall außerhalb eines gedachten geraden Zylinders angeordnet, dessen Grundfläche durch den Einlassventilteller 13 beschrieben wird und sich entlang der Ventilachse L12 erstreckt. Hierdurch wird sichergestellt, dass das Kraftstoff-Luftgemisch bei Eintritt in die Brennkammer 3 hinreichend durchmischt ist.

Ferner wird aufgrund des wirkenden Venturi-Effekts unmittelbar hinter dem Luftleitabschnitt 23 der wirkende Druck verringert, sodass restlicher sich in dem Einspritzröhrchen 19 befindlicher Kraftstoff aus dem Einspritzröhrchen 19 herausgesogen wird und kein Kraftstoff respektive kein Luft-Kraftstoff-Gemisch in das Einspritzröhrchen 19 zurückfließen kann. Somit wird die ungewollte Rückzündung von Kraftstoff in dem Einspritzröhrchen 19 vermieden.

### Bezugszeichenliste

- 1: Brennkraftmaschine
- 2: Kurbelgehäuse
- 3: Brennkammer
- 4: Kolben
- 5: Zylinderkopf
- 6: Zylinderkopfgrundelement
- 7: Einlasskanal
- 8: Wand
- 9: Brennkammereinlassöffnung
- 10: Auslasskanal
- 11: Brennkammerauslassöffnung
- 12: Einlassventil
- 13: Einlassventilteller
- 14: Einlassventilschaft
- 15: Auslassventil
- 16: Auslassventilteller
- 17: Auslassventilschaft
- 18: Injektor
- 19: Einspritzröhrchen
- 20: Einspritzöffnung
- 21: Aufsatzelement
- 22: Verbindungsabschnitt
- 23: Luftleitabschnitt
- 24: Durchbruch
- 25: Innengewinde
- 26: Werkzeugangriffsfläche

- L19: Röhrenseele
- L12: Ventilachse
- L15: Ventilachse

## Patentansprüche

1. Zylinderkopf für eine Brennkraftmaschine (1), umfassend:
eine Zylinderkopfanordnung, die einen Einlasskanal (7) aufweist,
ein röhrenförmiges Einspritzröhrchen (19), das sich entlang einer Röhrenseele (L19) in den Einlasskanal (7) erstreckt, und
ein Aufsatzelement (21), das auf dem Einspritzröhrchen (19) angeordnet ist,
**dadurch gekennzeichnet,**
**dass** der Zylinderkopf einen Injektor (18), der mit der
Zylinderkopfanordnung verbunden ist, aufweist, wobei das Einspritzröhrchen (19) mit dem Injektor (18) fluidisch verbunden ist, und
**dass** das Aufsatzelement (21) einen Luftleitabschnitt (23) aufweist,
- der sich bezüglich der Röhrenseele (L19) derart nach radial außen erstreckt, dass eine Strömung in dem Einlasskanal (7) durch den Luftleitabschnitt (23) beeinflusst wird,
- der als Luftleitscheibe ausgeführt ist und
- der einen koaxial zur Röhrenseele (L19) angeordneten Durchbruch (24) aufweist.

2. Zylinderkopf nach Anspruch 1,
**dadurch gekennzeichnet, dass** eine radiale Erstreckung des Luftleitabschnitts (23) bezüglich der Röhrenseele (L19) größer ist als eine axiale Erstreckung.

3. Zylinderkopf nach einem der Ansprüche 1 oder 2,
**dadurch gekennzeichnet, dass** das Aufsatzelement (21) einen ersten Verbindungsabschnitt (22) aufweist, mit dem das Aufsatzelement (21) auf dem Einspritzröhrchen (19) angeordnet ist, wobei sich der Luftleitabschnitt (23) von dem ersten Verbindungsabschnitt (22) bezüglich der Röhrenseele (L19) nach radial außen erstreckt.

4. Zylinderkopf nach Anspruch 3,
**dadurch gekennzeichnet, dass** die kleinste zylinderförmige Einhüllende des ersten Verbindungsabschnitts (22), deren Zylinderachse koaxial zu der Röhrenseele (L19) angeordnet ist, einen kleineren Radius aufweist als der größte radiale Abstand des Luftleitabschnitts (23) von der Röhrenseele (L19).

5. Zylinderkopf nach einem der Ansprüche 1 bis 4,
**dadurch gekennzeichnet, dass** das Einspritzröhrchen (19) eine Einspritzöffnung (20) aufweist, die sich in den Einlasskanal (7) öffnet.

6. Zylinderkopf nach Anspruch 1,
**dadurch gekennzeichnet, dass** die Luftleitscheibe in Richtung der Röhrenseele (L19) an den ersten Verbindungsabschnitt (22) anschließt.

7. Zylinderkopf nach Anspruch 6,
**dadurch gekennzeichnet, dass** die Luftleitscheibe einen Durchbruch (24) aufweist, dessen Längsachse koaxial zu der Röhrenseele (L19) angeordnet ist.

8. Zylinderkopf nach Anspruch 7,
**dadurch gekennzeichnet, dass** der Durchbruch (24) der Luftleitscheibe einen Durchmesser aufweist, der größer oder gleich einem Durchmesser der Einspritzöffnung (20) ist.

9. Zylinderkopf nach einem der Ansprüche 1 bis 8,
**dadurch gekennzeichnet, dass** das Aufsatzelement (21) ein Innengewinde (25) aufweist, das in ein Außengewinde des Einspritzröhrchens (19) eingreift.

10. Brennkraftmaschine umfassend:
einen Zylinderkopf (5) nach einem der Anspruch 1 bis 9.

## Claims

1. Cylinder head for an internal combustion engine (1), comprising:
a cylinder head assembly which has an inlet port (7),
a small tubular injection tube (19) which extends along a tube core (L19) into the inlet port (7), and
an attachment element (21) which is arranged on the small injection tube (19),
**characterized**
**in that** the cylinder head has an injector (18) connected to the cylinder head assembly, wherein the small injection tube (19) is connected fluidically to the injector (18), and in that the attachment element (21) has an air-guiding portion (23)
- which extends radially outwards with regard to the tube core (L19) in such a way that a flow in the inlet port (7) is influenced by the air-guiding portion (23),
- which is designed as an air-guiding disc, and
- which has an aperture (24) arranged coaxially with respect to the tube core (L19).

2. Cylinder head according to Claim 1,
**characterized in that** a radial extent of the air-guiding portion (23) with regard to the tube core (L19) is greater than an axial extent.

3. Cylinder head according to either of Claims 1 and 2,
**characterized in that** the attachment element (21) has a first connecting portion (22), by way of which the attachment element (21) is arranged on the small injection tube (19), wherein the air-guiding portion (23) extends radially outwards from the first connecting portion (22) with regard to the tube core (L19).

4. Cylinder head according to Claim 3,
**characterized in that** the smallest cylindrical envelope of the first connecting portion (22), the cylinder axis of which is arranged coaxially with respect to the tube core (L19), has a smaller radius than the greatest radial spacing of the air-guiding portion (23) from the tube core (L19).

5. Cylinder head according to one of Claims 1 to 4,
**characterized in that** the small injection tube (19) has an injection opening (20) which opens into the inlet port (7).

6. Cylinder head according to Claim 1,
**characterized in that** the air-guiding disc adjoins the first connecting portion (22) in the direction of the tube core (L19).

7. Cylinder head according to Claim 6,
**characterized in that** the air-guiding disc has an aperture (24), the longitudinal axis of which is arranged coaxially with respect to the tube core (L19).

8. Cylinder head according to Claim 7,
**characterized in that** the aperture (24) of the air-guiding disc has a diameter greater than or equal to a diameter of the injection opening (20).

9. Cylinder head according to one of Claims 1 to 8,
**characterized in that** the attachment element (21) has an internal thread (25) which engages into an external thread of the small injection tube (19).

10. Internal combustion engine comprising:
a cylinder head (5) according to one of Claims 1 to 9.

## Revendications

1. Culasse pour un moteur à combustion interne (1), comprenant :
un agencement de culasse présentant un canal d'admission (7),
un petit tube d'injection tubulaire (19) qui s'étend le long d'une âme de tube (L19) dans le canal d'admission (7), et
un élément rapporté (21) agencé sur le petit tube d'injection (19),
**caractérisée**
**en ce que** la culasse présente un injecteur (18) relié à l'agencement de culasse, le petit tube d'injection (19) étant relié fluidiquement à l'injecteur (18), et en ce que l'élément rapporté (21) présente une section de guidage d'air (23),
- qui s'étend radialement vers l'extérieur par rapport à l'âme de tube (L19) de telle sorte qu'un écoulement dans le canal d'admission (7) est influencé par la section de guidage d'air (23),
- qui est conçu sous forme de déflecteur d'air et
- qui présente une ouverture (24) agencée coaxialement à l'âme de tube (L19).

2. Culasse selon la revendication 1,
**caractérisée en ce qu'**une extension radiale de la section de guidage d'air (23) par rapport à l'âme de tube (L19) est supérieure à une extension axiale.

3. Culasse selon l'une des revendications 1 ou 2,
**caractérisée en ce que** l'élément rapporté (21) présente une première section de liaison (22) avec laquelle l'élément rapporté (21) est agencé sur le petit tube d'injection (19), la section de guidage d'air (23) s'étendant radialement vers l'extérieur à partir de la première section de liaison (22) par rapport à l'âme de tube (L19).

4. Culasse selon la revendication 3,
**caractérisée en ce que** la plus petite enveloppe cylindrique de la première section de liaison (22), dont l'axe de cylindre est agencé coaxialement à l'âme de tube (L19), présente un rayon inférieur à la plus grande distance radiale de la section de guidage d'air (23) par rapport à l'âme de tube (L19).

5. Culasse selon l'une des revendications 1 à 4,
**caractérisée en ce que** le petit tube d'injection (19) présente un orifice d'injection (20) qui s'ouvre dans le canal d'admission (7).

6. Culasse selon la revendication 1,
**caractérisée en ce que** le déflecteur d'air est raccordé à la première section de liaison (22) dans la direction de l'âme de tube (L19).

7. Culasse selon la revendication 6,
**caractérisée en ce que** le déflecteur d'air présente une ouverture (24) dont l'axe longitudinal est agencé coaxialement par rapport à l'âme de tube (L19).

8. Culasse selon la revendication 7,
**caractérisée en ce que** l'ouverture (24) du déflecteur d'air présente un diamètre supérieur ou égal à un diamètre de l'orifice d'injection (20).

9. Culasse selon l'une des revendications 1 à 8,
**caractérisée en ce que** l'élément rapporté (21) présente un filetage intérieur (25) qui s'engage dans un filetage extérieur du petit tube d'injection (19).

10. Moteur à combustion interne comprenant :
une culasse (5) selon l'une des revendications 1 à 9.
